# EUROPEAN PATENT APPLICATION

(11) **EP 0 569 599 A1**
(43) Date of publication of application: **18.11.1993**
(21) Application number: 92924020.8
(22) Date of filing: 27.11.1992
(51) Int. Cl.: B60T 8/30, B60T 8/26

(54) **BRAKE HYDRAULIC VALVE, CONTROL DEVICE AND CONTROLLING METHOD**

(30) Priority: 02.12.1991 JP 341751/91; 02.12.1991 JP 341752/91
(71) Applicant: NISSHINBO INDUSTRIES, INC., Chuo-ku, Tokyo 103 (JP)
(72) Inventor: KATO, Noboru 2923, Nishinowari Aza-doutoku, Aichi 457 (JP); ARAI, Nobuhisa 2923, Nishinowari Aza-doutoku, Aichi 457 (JP)
(74) Representative: Henkel, Feiler, Hänzel & Partner
(86) International application number: JP9201553
(87) International publication number: WO9311008

(57) **Abstract**

When the hydraulic pressure of rear wheels reaches a predetermined level (breakpoint brake hydraulic pressure), it is possible to prevent the earlier locking of the rear wheels by suppressing the increase of the rear wheel hydraulic pressure. When a live load is large, the locking hydraulic pressure of the rear wheels becomes higher than this predetermined level. Due to this, it is possible to shorten a stopping distance by increasing the breakpoint brake hydraulic pressure in accordance with the live load. The present invention provides an optimum control of the rear wheel braking through a simple construction using a hydraulic valve installed on a hydraulic pressure flow path between a master cylinder and the rear wheels by altering the value of the breakpoint brake hydraulic pressure by a signal value based on the live load.

## Description

### Background of the Invention

### Field of Invention

This invention relates to a novel brake pressure control valve, brake pressure control device, and method of control thereof, which regulates the pressure of the brake fluid supplied to the rear wheel brakes as a function of changes in the load conditions of the vehicle.

### Description of Prior Art

A rear wheel brake pressure control device which, when the vehicle is braked, senses the live load and regulates the rear wheel brake pressure as a function of the front wheel brake pressure in order to avoid premature locking of the rear wheels has been disclosed (Publication of Unexamined Patent Application No. 58(1983)-105863).

The said brake pressure control device is equipped with a pressure sensor which detects the fluid pressure to the rear wheel brakes, and taking into account the live load at the time of braking, processes the signals from the said pressure sensor, then regulates the supply of brake fluid from the master cylinder to the rear wheel brakes.

This conventional pressure control device has the following problematic points.
(1) The configuration becomes complex since a rear wheel pressure sensor is required.
(2) Control itself becomes complex since signals from the said rear wheel pressure sensor must be processed to regulate a brake pressure control valve.
(3) After the rear wheel brake pressure is detected, a decision must be made as to whether the said pressure has reached a prescribed value, a process which can cause a time lag, thus creating problems of reliability.

### Summary of the Invention

This invention provides a brake pressure control valve, a brake pressure control device, and control method thereof, of simple configuration which provides optimal control of the rear wheel brake pressure.

In braking the vehicle, should the pressure of the rear wheel brakes reach a prescribed pressure known as the yield-point brake pressure, a further increase in pressure is suppressed to prevent premature locking of the rear wheels. If the vehicle is heavily loaded however, the pressure at which the rear wheels will lock becomes higher than the said prescribed pressure. Therefore the yield-point brake pressure is increased as a function of the live load, and the braking distance can be shortened.

In this invention, optimum control of the rear wheel brakes is achieved without the use of a brake fluid pressure sensor, by installing a brake pressure control valve in the brake line between the master cylinder and the rear wheels, wherein the yield-point brake pressure can be changed in response to signals based on the live load.

### Brief Description of the Drawings

Figure 1 is an overall configuration of the brake pressure control device.

Figure 2 is a configuration of a brake pressure control valve which combines an hydraulically-actuated valve function and an electromagnetically-actuated valve function.

Figure 3 is a graph which shows the relative cylinder pressures of the front wheels and rear wheels for optimum brake control.

Figure 4 is a flow chart of the pressure control circuit **40**.

Figure 5 is an overall configuration of another brake pressure control device.

Figure 6 illustrates a brake pressure control valve of a different configuration.

Figure 7 is a graph which shows the relative cylinder pressures of the front wheels and rear wheels for optimum brake control using a brake pressure control valve of a different configuration.

Figure 8 is a flow chart of another pressure control circuit **40**.

Figure 9 is a flow chart of another pressure control circuit **40**.

Figure 10 is a flow chart of another pressure control circuit **40**.

### Detailed Description of the Preferred Embodiments

An example of this invention is explained in detail with reference to the diagrams.

### A. Overall Configuration

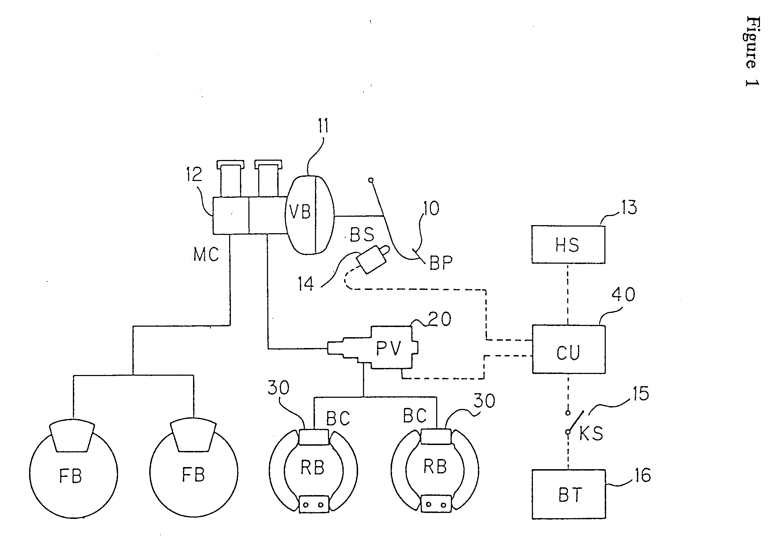

Figure 1 shows the overall configuration of the brake pressure control device.

The device comprises a brake pedal **10**, a booster device **11** which amplifies the force of the brake pedal **10**, and a two-line master cylinder **12**, in which one line is connected to the front brakes (FB) and the other line is connected to the brake cylinder **30** of the rear brakes (RB) via a brake pressure control valve **20**, to be discussed later.

A control circuit **40**, to be discussed later, controls the said brake pressure control valve **20** with signals input from a vehicle height sensor **13** which outputs signals corresponding to the live load of the vehicle, and from a brake switch **14** which senses whether the brake is on or off. A key switch **15** turns on or shuts off the power source **16** to the said control circuit **40**.

A load sensor or other means which will output a signal as a function of the live load can be used in place of the said vehicle height sensor **13**.

### B. Configuration of Brake Pressure Control valve

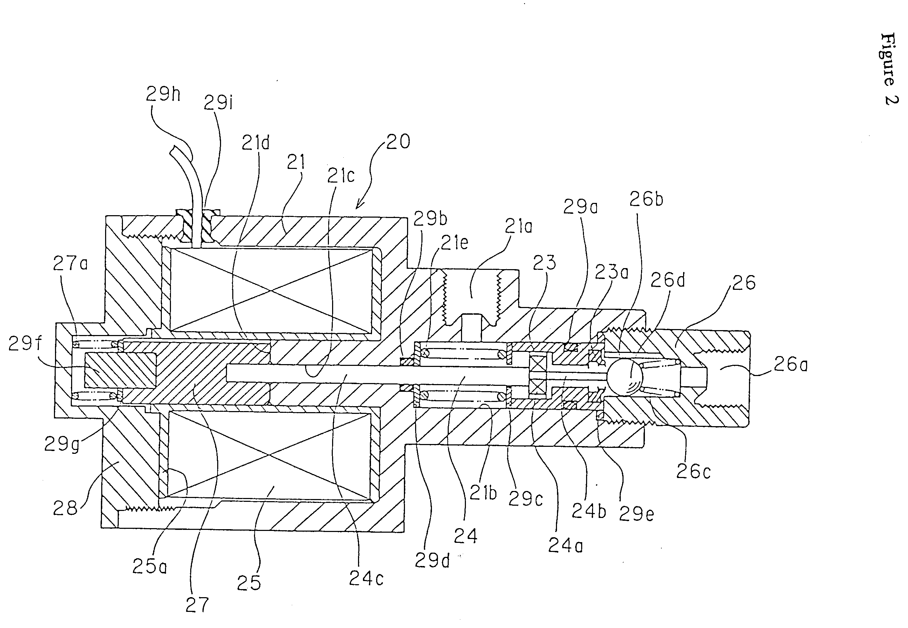

Figure 2 shows an example of a brake pressure control valve **20** which has a combined hydraulically-actuated valve function and an electromagnetically-actuated valve function.

A housing **21** comprises a discharge port **21a** connected to the brake cylinder **30**, a large-diameter cylindrical cavity **21b** with passage to the said discharge port **21a**, and a small-diameter cylindrical cavity **21c**. A slidable piston **23** is inserted through a seal **29a** into the said large-diameter cylindrical cavity **21b**, while a slidable push rod **24** is inserted through a seal **29b** into the small-diameter cylindrical cavity **21c**.

A flange **24a** is molded around the center of the push rod **24**; further a protrusion **24b**, is molded on the front end of said flange **24a**, both of which are inserted into piston **23**. Spring 1 **21e** is compressed between the bottom of the large-diameter cylindrical cavity **21b**, and the tail end of the piston **23**. Spring seats **29c**, **29d** are positioned on either end of said spring 1 **21e**.

A plug **26** is screwed into the front end of the housing **21**, and the inlet port **26a** connected to the master cylinder **12** shown in Figure 1 is molded on the forward end of said plug **26**.

A ball **26d** is housed by means of spring 2 **26c** within the grooved cavity **26b** of plug **26**; said spring 2 **26c** is constantly energized in the direction of piston **23** such that the ball **26d** will abut the forward end of the protrusion **24b** of the push rod **24**.

A valve arrangement is formed from ball **26d** which constantly abuts the protrusion **24b** of the push rod **24**, and a valve seat **23a** attached to the front end of piston **23**. A gasket **29e** forms a fluid-tight seal between the housing **21** and the plug **26**.

A solenoid **25** formed from conductor wire coiled around a cylindrical sleeve **25a** and a slidable core **27** inserted inside the sleeve **25a** is housed within the rear portion of the housing **21**; these parts are sealed by a cap **28** which covers the rear portion of the housing.

Spring 3 **27a**, energized in the direction such that the front end face of core **27** will abut the rear end face **21d** of the bottom edge of the small-diameter cylindrical cavity **21c**, is compressed between the cap **28** and the rear end face of the core **27**.

A tail portion **24c** is molded to form a single unit with, or is attached in a detachable state to the above-described push rod **24** along the axial center of the core **27**. A spacer **29f** is set to maintain a specified gap between the rear end of the core **27** and the cap **28** covering the rear portion of the housing **21**. A spring seat **29g**, conductor wire **29h**, and grommet **29i** complete the configuration.

The electromagnetically-actuated valve function is configured such that when the solenoid **25** is energized, the magnetic field produced therein creates an attractive force between the core **27** and the rear end face **21d** of the bottom edge of the small-diameter cylindrical cavity **21c**. That is, when an electric current is applied to the solenoid **25**, the core **27** and the small-diameter cylinder within the housing **21** are magnetized, wherein if one of the end of the core **27** (near **21d**) or the rear end **21d** of the small-diameter cylindrical cavity becomes the north pole, the other becomes the south pole causing an attractive force between the two parts at **21d**. A strong current applied to the solenoid **25** increases the attractive force, and the force required to separate the core **27** from the rear end **21d** of the small-diameter cylindrical cavity of housing **21** can be determined by the strength of this current. The yield-point brake pressure, to be explained later, can be set given this current strength. The spring force of the three springs are set in decreasing order from spring 2 **26c**, to spring 3 **27a**, to spring 1 **21e**.

### C. Relative Cylinder Pressures of the Front and Rear Brakes for Optimum Brake Control

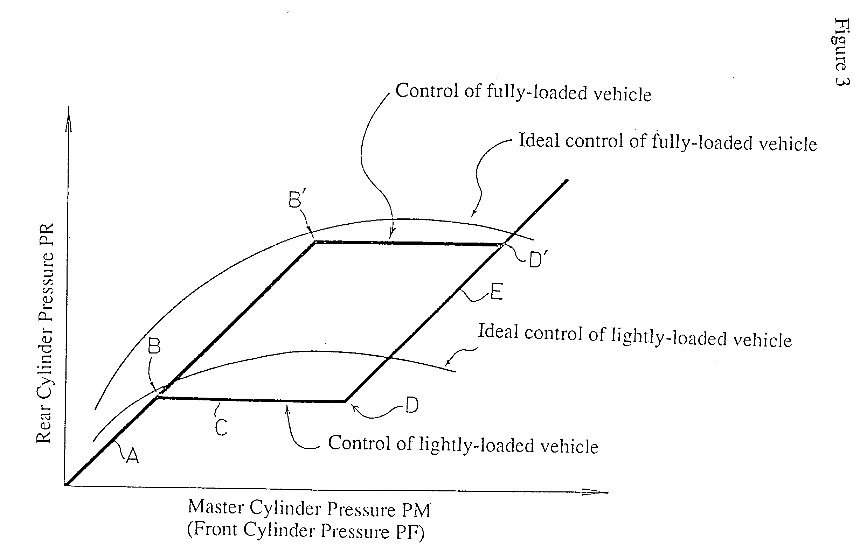

Figure 3 is a graph which shows the relationship between the cylinder pressures of the front brakes and rear brakes for optimum brake control. The two curves in the figure represent the ideal situation where the relative brake pressures provide optimum brake control rather than locking of the front brakes alone or the rear brakes alone. The bottom curve shows the ideal relationship for a lightly-loaded vehicle carrying no baggage, while the top curve shows the ideal relationship for a vehicle loaded to the maximum recommended capacity (e.g. 350 kg).

Of the straight lines, Line A shows a situation where as the master cylinder brake pressure (P_{M}), that is the front cylinder pressure (P_{F}), increases so does the rear cylinder pressure (P_{R}) such that pressure is applied equally to the front and rear wheels.

Point B indicates the yield-point brake pressure (e.g. 10-20 kgf/cm²) under light loads, wherein should the rear wheel pressure rise above this value, the rear wheels of the vehicle could lock depending on its characteristics. Thus the rear cylinder pressure should be fixed to approximate the ideal setting for light loads (Line C). Point D corresponds to the point at which the master cylinder pressure P_{M} rises further (e.g. 40-60 kgf/cm²), that is, braking has been ineffective and the brake pedal has been pushed further towards the ultimate limit. In this case, the front brakes are deemed to be defective, wherein the rear wheel brake pressure is increased as an emergency measure to increase the braking force of the rear wheels (Line E).

Point B' is the yield-point brake pressure for maximum loads, where the yield-point control pressure is increased (e.g. 20-50 kgf/cm²) since the rear wheel brake force must be increased with the increased load. Point D' is the value for a loaded vehicle corresponding to Point D for no loads. The yield-point brake pressure is set at a value between Point B and Point B' depending on the weight of the live load.

### D. Explanation of Control Circuit

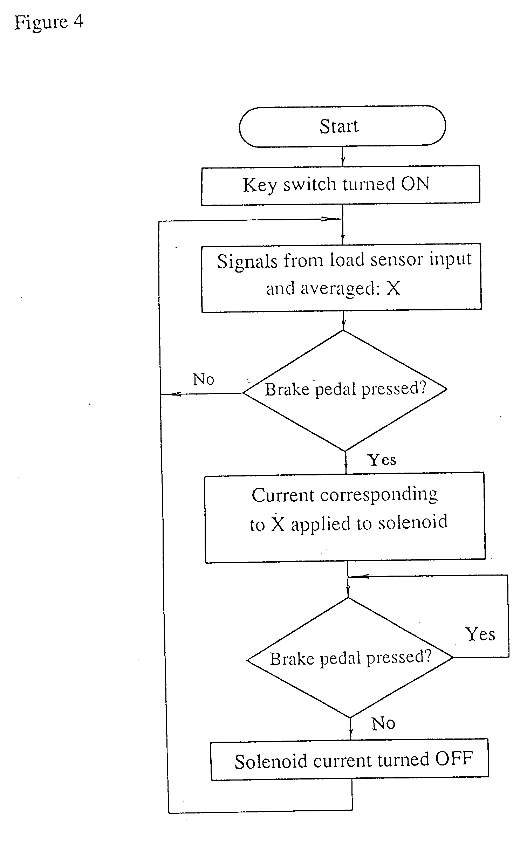

Figure 4 is a flow chart for control of the control circuit **40** of this invention.

Key switch **15** is turned on, wherein if digital signals corresponding to the live load of the vehicle, detected for example from a vehicle height sensor **13** which detects the relative displacement between the top of a bounce and the bottom of a bounce, are output, the said signals are converted to analog signals which are then averaged by the charging and discharging of a capacitor or other means. This will cancel the momentary changes in vehicle height which occurs for example when hitting a bump.

Next, if the brake switch **14** ascertains that the brake pedal has been pressed, the control circuit **40** sends a current corresponding to the above-described output signal of the live load to the solenoid **25** of the brake pressure control valve **20** to control the pressure of the rear wheel brakes. If the brake pedal continues to be pressed, the current continues to be transmitted to the brake pressure control valve **20** at the same strength. When the pedal is released, the brake switch **14** is turned off disrupting the current to the solenoid of the brake pressure control valve **20**, wherein regulation of the pressure with one brake operation is completed.

Next the operation of the brake pressure control device is explained with reference to Figures 1-4 inclusive.

### A. If vehicle is lightly loaded

For a lightly-loaded vehicle, when the brake pedal **10** in Figure 1 is pressed, brake fluid from one line of the master cylinder **12** is transmitted directly at that pressure to the front wheels to brake the said wheels.

Brake fluid from the other line of the master cylinder **12** is guided to the inlet port **26a** of the control valve **20** in Figure 2, and is transmitted through a circuit comprising the grooved cavity **26b** of the plug **26**, the piston **23**, the large-diameter cylindrical cavity **21b** and on through the discharge port **21a** to the rear brake cylinder **30** to start braking of the rear wheels.

Throughout this period, the fluid pressure P_{R} of the rear brake cylinder **30** increases in direct proportion to the pressure P_{M} of the master cylinder **12** as shown by Line A of Figure 3.

When the rear brake cylinder **30** pressure reaches the first prescribed pressure defined as that point where the sum of the force of the pressure of the brake fluid acting on the small-cylindrical cavity **21c** of the control valve **20** plus the force of spring 2 **26c** exceeds the force of spring 3 **27a,** then the push rod **24** reverses in tandem with the ball **26d** and the core **27** towards the cap **28** (left side of the diagram). At this time, since the solenoid **25** is not energized, the said push rod **24** reverses with the above-described relative forces only.

As a result, the ball **26d** becomes seated in the valve seat **23a** to close the brake line and maintain the pressure of the rear brake cylinder **30**. That is, the pressure PR of the rear brake cylinder **30** is maintained at a fixed pressure within the limit set by Point B (yield-point) of Figure 3 (Line C).

Should the pressure of the master cylinder **12** rise further and reach the second prescribed pressure defined as the point where the force from the pressure difference (P_{M} - P_{R}) acting on the two ends of piston **23** exceeds the force of spring 1 **21e**, then the ball **26d**, piston **23**, push rod **24**, and core **27** start to move in tandem towards the cap **28**. As a result, the fluid which had become sealed inside the large-diameter cylindrical cavity **21b** is compressed, wherein the pressure of the rear brake cylinder **30** once again starts to rise (Point D of Figure 3).

When the tail end of the spacer **29f** abuts the cap **28**, the reverse motion of the push rod **24** is impeded, and the piston **23** and the valve seat **23a** move toward the cap **28**. Therein a tiny gap is formed between the ball **26d** and the valve seat **23a** enabling brake fluid from the master cylinder **12** to be fed into the large-diameter cylindrical cavity **21b**. As a result, the pressure difference acting on either side of the piston **23** becomes smaller, wherein the force of spring 1 **21e** causes the piston **23** to move towards the plug **26** and the ball **26d** becomes seated in the valve seat **23a**. This cycle of operations is repeated to regulate the rear cylinder pressure P_{R} to the proper degree required to correspond to the rise in the master cylinder pressure PM (Line E of Figure 3).

### B. If vehicle is fully loaded

The vehicle height sensor **13** electronically detects the load condition of the vehicle, and continually inputs the detected signals to the control circuit **40**.

Based on these signals the control circuit **40** alters the strength of the current being supplied to the solenoid **25** from the conductor wire **29h**. As the solenoid **25** is energized, a magnetic field is generated wherein the housing **21**, cap **28**, and core **27**, each formed from a strong magnetic substance, are magnetized as a closed loop. Consequently, an attractive force is generated between the rear end face **21d** of the small-diameter cylindrical cavity **21c**, and front end face of the core **27** of the housing **21**. This attractive force is controlled by changing the current strength.

As shown in Figure 3, for a loaded vehicle the allocation of the rear cylinder pressure PR must be increased. Accordingly, if the yield-point brake pressure is set at an intermediate value between Point B and Point B', the resultant approximation to the ideal curve will provide better braking. Specifically, even if the master cylinder pressure P_{M} reaches the yield-point brake pressure Point B, the said attractive force between the core **27** and the rear end face **21d** of the small-diameter cylindrical cavity **21c** of housing **21** will impede the movement of the push rod **24** towards the cap **28**.

Should the master cylinder pressure P_{M} reach an even higher yield-point pressure, and the combined force of the pressure of the small-diameter cylinder **21c** and the force of spring 2 **26c** exceed the combined force of the above-described magnetic attractive force and the force of spring 3 **27a**, then the push rod 24 will move in tandem with the ball **26d**, core **27**, and spacer **29f** towards the cap **28** (Point B'). All subsequent operations are similar to the above-described operations for a lightly loaded vehicle.

The yield-point brake pressure for a fully-loaded vehicle can be successively changed by regulating the current applied to the solenoid **25** as a function of changes in the vehicle load. As one practical example, the yield-point brake pressure can be set in 8 increments between Point B and Point B'.

In this present example, of the two brake lines from the master cylinder **12**, one line leads towards the front brakes FB, while the other line leads towards the rear brakes RB in a so-called figure-H distribution. However, one line can instead lead towards the front right wheel and rear left wheel, while the other line leads towards the front left wheel and rear right wheel in a diagonal figure-X arrangement. In the latter case, a brake pressure control valve **20** should be positioned in each brake line between the master cylinder **12** and the rear brakes RB. As well, this control valve can be positioned similarly in each brake line between the master cylinder **12** and the front brakes to control the pressure to the front brakes for front-wheel drive vehicles.

Other examples of this invention are explained below.

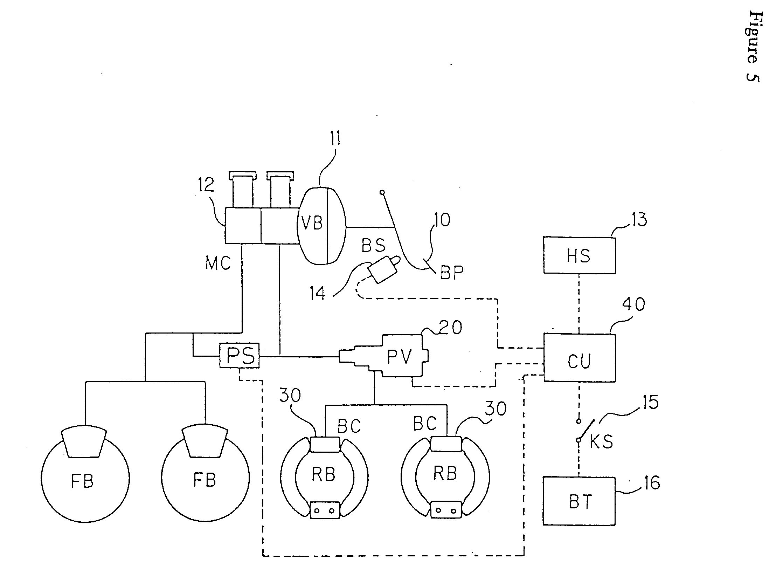

Figure 5 shows the overall configuration of another example of the brake pressure control device of this invention, for which the following points differ from the previous example.

Here a pressure difference switch PS connected to each of the two lines of the master cylinder **12** monitors the difference in pressure between the two lines, and should it detect a signal equal to or higher than a prescribed difference, outputs it to the control circuit **40**. Upon receipt of the signal, the control circuit **40** records it in memory, transmits a strong current to the solenoid **25** of the brake pressure control valve **20**, then sets a high pressure (extrapolated from Line BB') as the maximum value for the first prescribed pressure to be described following (Point B' of Figure 3). Specifically, should the pressure in the front brake line begin to fall, and a pressure difference equal to or greater than the prescribed value is detected, the pressure of the rear brake line is regulated starting at the maximum high pressure limit, therein maintaining the braking force of the vehicle.

### A. Configuration of a Brake Pressure Control Valve of Different Shape

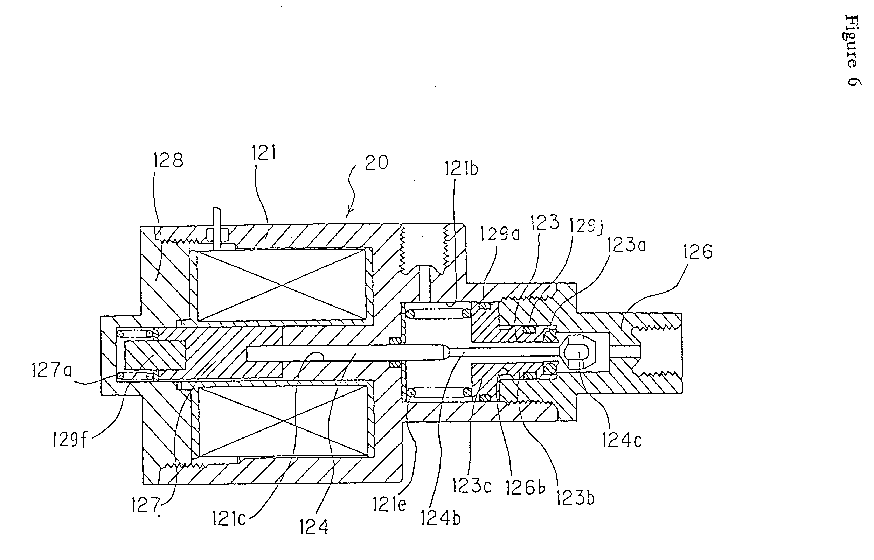

Figure 6 is an example of a brake pressure control valve of different configuration, and those parts which differ from the valve of Figure 2 are explained. Parts similar to the parts (xx) of the control valve of Figure 2 are labeled as 1xx.

In the brake pressure control valve **20'** of this Example, piston **123** is molded stepwise such that the pressure-subjected areas on either end are of different diameter in order to respond to the different brake pressure characteristics of different types of vehicles. That is, the cross section diameter of the large diameter portion **123c** of piston **123** positioned within the large-diameter cylindrical cavity **121b** of housing **121** is larger than the cross section diameter of the small diameter portion **123b** positioned within the cylindrical cavity **126b** of the plug **126**.

The large-diameter portion **123c** of the stepped piston **123** is inserted in a fluid-tight but slidable condition inside the large-diameter cylindrical cavity **121b** of the housing **121** through seal ?**129a**?, and the small-diameter portion **123b** is inserted in a fluid-tight but slidable condition through seal ?**129j**? inside the cylindrical cavity **126b** of plug **126**.

A head **124c** equivalent to the valve body is integrally molded onto the protrusion **124b** of the push rod **124**, thus the ball **26d** and spring 2 **26c** of Figure 2 can be omitted.

### B. Operation of Said Brake Pressure Control Valve

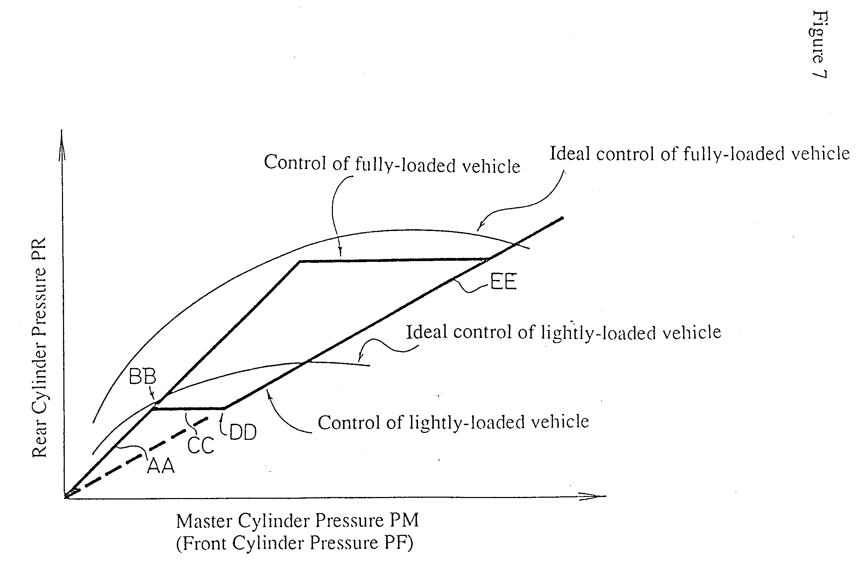

The operation of the said brake pressure control valve is explained with reference to Figure 7; special symbols (X) corresponding to those in Figure 3 are doubled (XX) here, and those operations which differ from Figure 3 are explained here.

When the master cylinder pressure P_{M} reaches the yield-point brake pressure BB and the force of the pressure of the small-diameter cylinder **121c** exceeds the force of spring 3 **127a**, the push rod **124** moves in tandem with the core **127** and spacer **129f** towards the cap **128**. This movement seats the head **124c** of the push rod **124** inside the valve seat **123a** to block the brake line and keep the rear cylinder pressure PR from rising (Point BB-Line CC).

Should the master cylinder pressure P_{M} increase further and reach Point DD, and the force of the pressure difference (P_{M} - P_{R}) acting on the two ends of the piston **123** and the force of the pressure arising from the difference in area of the large-diameter and small-diameter ends of the piston, exceed the force of spring 1 **121e**, then the push rod **124**, piston **123**, core **127**, and the spacer **129f** move as a single unit towards the cap **128**, wherein the brake fluid sealed inside large-diameter cylindrical cavity **121b** becomes compressed and the rear cylinder pressure P_{R} once again starts to rise (Point DD).

Subsequent operations and the operation for a fully-loaded vehicle are similar to Example 1; thus an explanation will be omitted here. However, the slope of line EE is characteristically different from Figure 4 because the piston **123** has been molded stepwise wherein the pressure-subjected areas differ. These areas can be modified to obtain a suitable slope.

### C. Explanation of Another Control Example of the Control Circuit

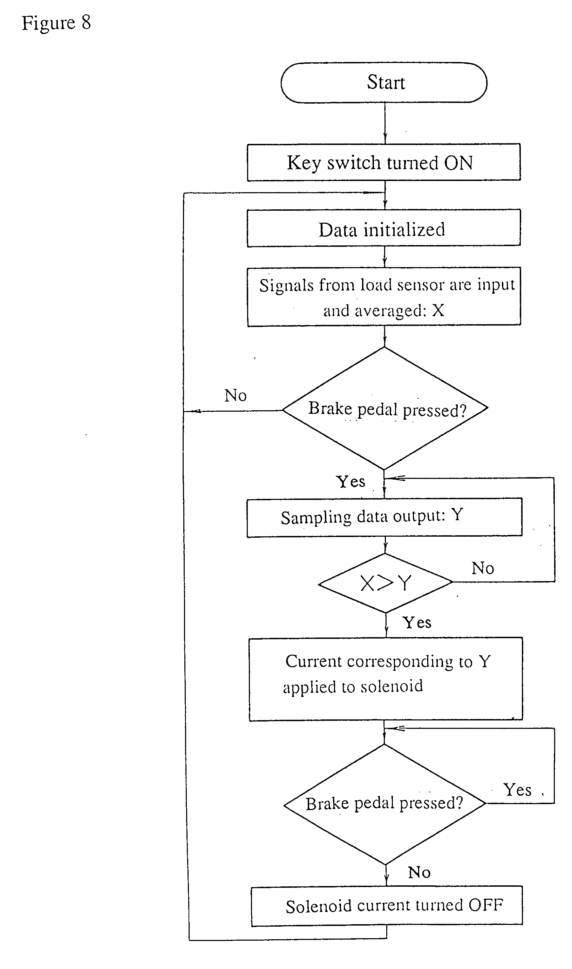

Figure 8 is a flow chart of another method of control of the control circuit **40**, for which those points different from the above-described example will be explained here.

In this example, pre-determined sampling data Y is created by an incorporated logic circuit. Thereafter, a current corresponding to the detected load signal X, averaged as described previously, and this sampling data Y is applied to the solenoid **25** of the brake pressure control valve **20** to regulate the pressure of the rear brakes RB.

The sampling data Y are stepped digital signals of the applied voltage being incrementally adjusted from high to low. To compare this data with the detected load signal X, a signal X is first compared with the highest established sampling data Y, wherein it signal X is lower, then the comparison progresses down to the next step. If signal X is higher than signal Y, that current being applied to the brake pressure control valve **20** is retained for output.

This processing must be completed before the solenoid **25** of the brake pressure control valve **20** becomes energized upon pressing the brake pedal as described previously. This is necessary because it would be meaningless for the solenoid **25** to be energized to start operation of the brake pressure control valve **20** once the yield-point brake pressure BB is reached and the rear cylinder **30** pressure PR is being regulated.

When pressure on the brake pedal is released, current flowing to the solenoid **25** is blocked, the sampling data Y is initialized and the system waits for the next signal at the highest set voltage.

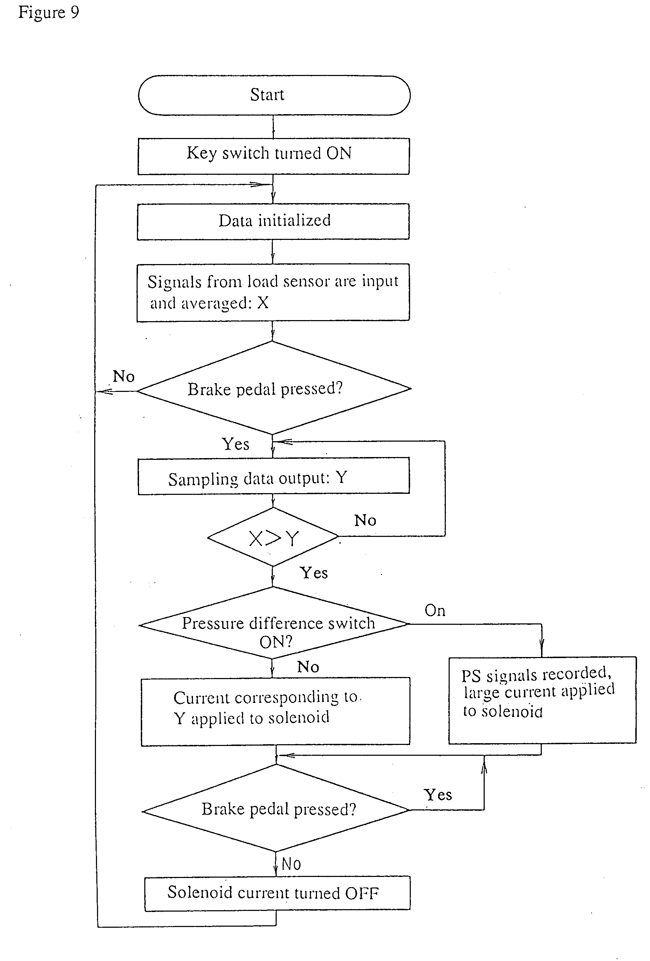

Figure 9 is another control example, wherein a pressure difference switch PS monitors the difference in pressure between one line (e.g. front brake line) and the other line (e.g. rear brake line) of a two-line master cylinder **12**. Should it detect a signal equal to or higher than a prescribed difference, it outputs the signal to the control circuit **40**.

Upon receipt of the signal, the control circuit **40** records it in memory, continues to transmit a strong current to the solenoid **25** of the brake pressure control valve **20**, then sets a high pressure as the upper limit for the yield-point brake pressure (e.g. Point B' of Figure 3). Thus, should a pressure difference equal to or greater than the specified value be detected when one line fails, regulation of the rear brake line is canceled, and braking force is maintained.

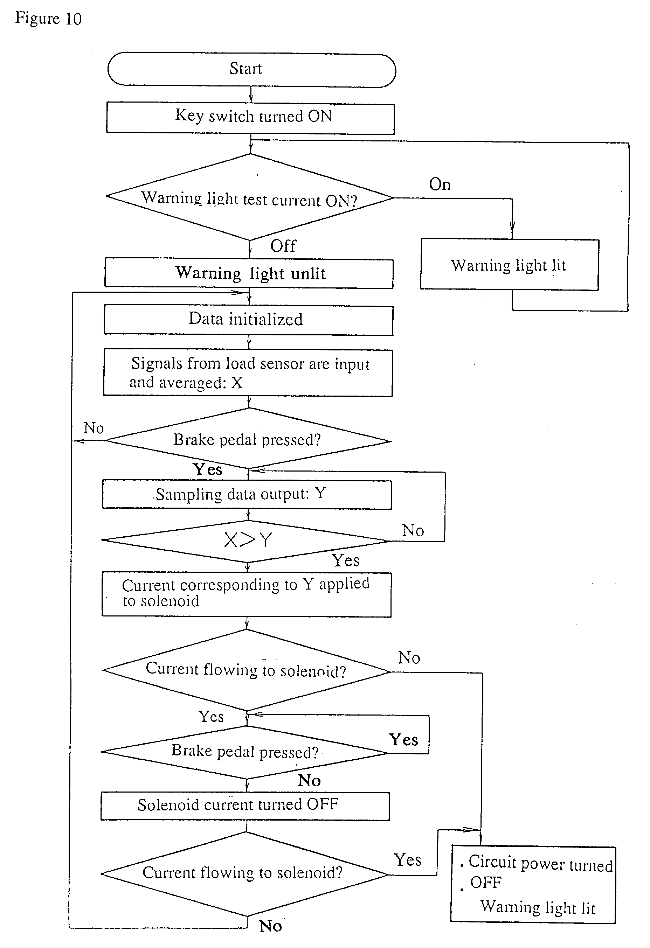

Figure 10 is another control example, which has an additional built-in function, which when the key switch **15** is switched on and it ascertains that the warning light is unlit, then during subsequent operation of the control circuit **40** should it detect broken wiring in the solenoid **25** of the brake pressure control valve **20**, leaky electrical current, or a defect in the control circuit, then the said function turns on the said warning light and at the same time, shuts off current to the control circuit **40** to protect the said circuit.

This invention has the following advantageous features.
(1) Should the pressure of the brake fluid being supplied to the rear wheels reach a prescribed pressure (yield-point brake pressure), a further increase in pressure is inhibited to prevent premature locking of the rear wheels. If the vehicle is heavily loaded however, the pressure at which the rear wheels will lock becomes higher than this prescribed pressure. Therefore the yield-point brake pressure is increased as a function of the load, and the braking distance can be shortened.
   In this invention, optimum control of the rear wheel brakes is achieved by a simple configuration without the use of a brake fluid pressure sensor, wherein a brake pressure control valve is installed in the brake line between the master cylinder and the rear wheels, and the yield-point brake pressure can be changed in response to signals based on the live load.
(2) The yield-point brake pressure (that is the current supplied to the solenoid coil **25**) can be determined by signals based on the live load of the vehicle without the use of a brake fluid pressure sensor, thus enabling precise brake control immediately upon initiating a braking operation.

### Industrial Applicability

As explained above, the brake pressure control valve, brake pressure control device, and method of control thereof of this invention can accurately control the braking of a vehicle.

## Claims

1. A novel brake pressure control valve which opens and closes a valve arrangement as a function of the live load of the vehicle to regulate the pressure of the brake fluid supplied from the master cylinder to the brake cylinder, comprising a housing with a cylindrical cavity of non-uniform diameter over the length of the cavity which provides passage between the master cylinder and brake cylinder; wherein a cylindrical piston energized in the direction to close passage by means of spring 1 is inserted in a slidable and adjustable manner within the large-diameter portion of the cylindrical cavity; a push rod energized in the direction to open passage by means of spring 2 is inserted in a slidable and adjustable manner within the small-diameter portion of the cylindrical cavity; a valve body is molded on the front end of the push rod inserted within the piston; a valve arrangement configured from the said valve body and a valve seat set on one end of the piston is set to open or close passage between the master cylinder and the brake cylinder; a solenoid is housed inside the tail end of the housing; and a core abutting the tail end of the push rod is inserted in a slidable and adjustable manner along the axial center of the solenoid; wherein during a braking operation, energizing of the solenoid as a function of the live load of the vehicle causes the core to be magnetically attracted in the direction to open the said valve arrangement.

2. A novel brake pressure control device which regulates the pressure of the brake fluid supplied from the master cylinder to the brake cylinder, comprising a sensor that outputs signals corresponding to the live load of the vehicle, a pressure control circuit that outputs pressure regulator signals of prescribed value corresponding to the output signals from the said sensor, a brake pressure control valve, incorporated in the hydraulic fluid line between the said master cylinder and the brake cylinder, that in response to the prescribed value of the said pressure regulator signal changes a yield-point brake pressure which starts to regulate the said brake pressure being supplied to the said brake cylinder, and a brake detection means that detects a braking operation; wherein the said brake pressure control device holds the pressure regulator signal at the prescribed value throughout the braking operation.

3. A novel brake pressure control device as claimed in Claim 2 in which the pressure control circuit averages the signals output from the said sensor and then outputs an electrical current of specified strength as a function of the said averaged signal.

4. A novel brake pressure control device as claimed in Claim 2 in which the pressure control circuit averages several series of signals output from the said sensor, compares that averaged signal with predetermined sampling data, then outputs an electrical current of specified strength as a function of the sampling data.

5. A novel brake pressure control device which regulates the pressure of the brake fluid supplied from the master cylinder to the brake cylinder comprising a sensor that detects signals corresponding to the live load of the vehicle, a pressure control circuit that averages the output signals of the said sensor and outputs an electric current of prescribed strength as a function of this averaged signal, a pressure differential detection means that outputs a pressure difference signal whenever the difference in pressure between the two lines of a two-line master cylinder reaches or exceeds a prescribed value, a brake pressure control valve incorporated in the brake line between the said master cylinder and the brake cylinder comprising a solenoid that is energized with the said electric current of prescribed value and wherein the strength of this energization changes a yield-point brake pressure which starts to regulate the said brake pressure, a brake detection means that detects a braking operation, a means to supply a strong electric current to the said solenoid upon the output of the detected pressure difference signals, and a means to retain the said detected pressure difference signals until the said pressure difference is restored to a value equal to or less than the prescribed value.

6. A novel brake pressure control method which regulates the pressure of the brake fluid supplied from the master cylinder to the brake cylinder comprising a step to output a pressure regulator signal of prescribed value as a function of the live load of the vehicle, and a step that inputs the said pressure regulator signal at a fixed value into a brake pressure control valve incorporated in the brake line between the said master cylinder and brake cylinder throughout a braking operation; wherein the said pressure regulator signal sets a fixed value for the yield-point brake pressure which starts the regulation of the said brake pressure being supplied to the said brake cylinder.
